# FASCICULE DE BREVET EUROPEEN

(11) **EP 3 985 277 B1**
(45) Date de publication et mention de la délivrance du brevet: **24.05.2023**
(21) Numéro de dépôt: 21201810.5
(22) Date de dépôt: 11.10.2021
(51) Int. Cl.: F16F 7/01, F16F 1/02, F02K 9/60, B33Y 80/00, B22F 10/28, B22F 5/00

(54) **DISPOSITIF D'AMORTISSEMENT AMÉLIORÉ POUR ENGIN SPATIAL ET PROCÉDÉ DE FABRICATION DU DISPOSITIF D'AMORTISSEMENT**
DÄMPFUNGSVORRICHTUNG FÜR RAUMFAHRZEUGE UND VERFAHREN ZUR HERSTELLUNG DIESER DÄMPFUNGSVORRICHTUNG
IMPROVED DAMPING DEVICE FOR SPACECRAFT AND METHOD FOR MANUFACTURING THE DAMPING DEVICE

(30) Priorité: 12.10.2020 FR 2010404
(43) Date de publication de la demande: 20.04.2022
(73) Titulaire: ArianeGroup SAS, 78130 Les Mureaux (FR)
(72) Inventeur: PYRE, Alain, 27207 Vernon Cedex (FR); LAMBERT, Océane, 27207 Vernon Cedex (FR)
(74) Mandataire: Cabinet Beau de Loménie

(56) Documents cités:
- WO-A1-2020/090169
- DE-A1-102010 046 579
- DE-A1-102016 225 743
- FR-A1- 3 058 767
- JP-A- 2005 265 108
- US-A1- 2003 098 389
- US-A1- 2007 012 530
- US-A1- 2012 024 646

## Description

### Domaine Technique

Le présent exposé concerne le domaine des engins aéronautiques, et notamment des moteurs de fusée. Le présent exposé concerne en particulier un dispositif d'amortissement pour amortir les vibrations entre un composant à isoler du moteur de fusée et une structure porteuse de ce moteur, et un procédé de fabrication d'un tel dispositif.

### Technique antérieure

Les moteurs spatiaux à ergols liquides doivent fonctionner dans des ambiances vibratoires sévères. Ces vibrations peuvent être générées par leur fonctionnement propre, par les ondes de pression et les ondes acoustiques générées par les propulseurs d'appoint à poudre, ou encore par l'excitation dynamique que le lanceur impose aux moteurs à leurs points d'interface (cardans et accroches vérins). Ces vibrations du lanceur peuvent elles-mêmes résulter de l'excitation des propulseurs d'appoint à poudre, de l'excitation des moteurs cryogéniques, ou encore de l'excitation due aux charges aérodynamiques instationnaires dans l'atmosphère.

Certains composants ou équipements fixés sur le moteur ou sur les étages du lanceur ne peuvent tolérer de tels environnements vibratoires. Il est donc nécessaire de disposer de systèmes simples, légers et présentant un coût limité, pour amortir les vibrations transmises par les moteurs ou les étages sur ces composants ou équipements.

De manière connue, ces systèmes d'amortissement peuvent se classer en deux grandes familles : une première famille faisant appel à des amortisseurs tels que des amortisseurs mécaniques, pneumatiques, hydrauliques, passifs ou actifs, et une deuxième famille reposant sur l'insertion de matériaux dits « mous » et amortissants, entre le composant à protéger et la structure porteuse générant les fortes sollicitations dynamiques.

La première famille est très efficace en terme d'amortissement, mais généralement lourde, coûteuse et/ou complexe à mettre en oeuvre. La seconde famille présente l'inconvénient d'amortir moins bien que la première famille. Elle doit en outre ne pas être excessivement comprimée afin de ne pas compromettre sa fonction d'amortissement. Or, les efforts de serrage du composant à isoler sur sa structure porteuse doivent être souvent importants, pour résister aux charges dynamiques importantes, ce qui réduit considérablement l'efficacité d'amortissement de cette famille d'amortisseurs.

Par ailleurs, ces systèmes d'amortissement doivent, dans certains cas, être utilisables dans des environnements thermiques sévères, pouvant alterner entre des conditions cryogéniques et des conditions à températures proches de l'ambiante, voire à hautes ou très hautes températures. Or, les deux familles décrites ci-dessus ne sont pas utilisables à basses ou à hautes températures.

Il existe donc un besoin pour pallier, au moins en partie, aux inconvénients mentionnés ci-dessus.

Le document DE102016225743A1 divulgue un dispositif d'amortissement pour engin spatial, configuré pour amortir les vibrations entre un composant à isoler et une structure porteuse de l'engin spatial, le dispositif d'amortissement comprenant : une structure de ressort externe renfermant une enceinte interne, configurée pour se déformer élastiquement selon une direction principalement longitudinale, et comprenant une première extrémité configurée pour être fixée à la structure porteuse, et une deuxième extrémité configurée pour être fixée au composant à isoler, l'enceinte interne étant remplie au moins en partie d'une poudre métallique.

Les documents US2003098389A1, FR3058767A1, WO2020090169A1 et US2012024646A1 divulguent des outres amortisseurs connus.

### Exposé de l'invention

Le présent exposé concerne un dispositif d'amortissement pour engin spatial, configuré pour amortir les vibrations entre un composant à isoler et une structure porteuse de l'engin spatial, le dispositif d'amortissement comprenant :
- une structure de ressort externe renfermant une enceinte interne, configurée pour se déformer élastiquement selon une direction principalement longitudinale, et comprenant une première extrémité configurée pour être fixée à la structure porteuse, et une deuxième extrémité configurée pour être fixée au composant à isoler,
- au moins un élément d'amortissement solidaire de la structure de ressort externe et s'étendant à l'intérieur de l'enceinte interne,
la structure de ressort externe et l'élément d'amortissement étant formés en un même matériau et en un seul bloc par fabrication additive, l'enceinte interne étant remplie au moins en partie d'une poudre de ce même matériau métallique de manière à ce que l'élément d'amortissement soit disposé au moins en partie dans la poudre.

Dans certains modes de réalisation, l'élément d'amortissement est un premier élément d'amortissement solidaire de la première extrémité, le dispositif d'amortissement comprenant au moins un deuxième élément d'amortissement solidaire de la deuxième extrémité et s'étendant à l'intérieur de l'enceinte interne, le premier et le deuxième élément d'amortissement étant configurés pour se déplacer relativement l'un par rapport à l'autre le long de la direction principalement longitudinale lorsque la structure de ressort externe se déforme élastiquement principalement selon ladite direction longitudinale, la structure de ressort externe, le premier et le deuxième élément d'amortissement étant formés en un même matériau métallique et en un seul bloc par fabrication additive.

Le dispositif d'amortissement est du type système ressort-amortisseur. La fonction de ressort est assurée par la structure de ressort externe, et la fonction d'amortissement est assurée par les éléments d'amortissement, ainsi que par la poudre. Plus précisément, la poudre présente dans l'enceinte interne permet de dissiper l'énergie engendrée par le mouvements relatifs du premier et du deuxième élément d'amortissement, permettant de générer l'amortissement souhaité, par frottement au sein même de la poudre, ainsi qu'entre la poudre et les premier et deuxième éléments d'amortissements, et entre la poudre et les parois de l'enceinte interne.

De préférence, la structure de ressort externe est axisymétrique autour de l'axe longitudinal, et présente la forme d'un boîtier fermé renfermant l'enceinte interne, à l'intérieur de laquelle sont disposés le premier et le deuxième élément d'amortissement, et la poudre. La forme de cette structure de ressort est telle qu'un déplacement relatif du composant à isoler par rapport à la structure porteuse engendre une déformation élastique de la structure de ressort, selon l'axe longitudinal principalement. Par exemple, un rapprochement entre le composant à isoler et la structure porteuse engendre un rapprochement de la première extrémité et de la deuxième extrémité de cette structure et par conséquent, une compression de la structure de ressort. Le rapprochement de la première extrémité et de la deuxième extrémité de la structure de ressort engendre également un déplacement relatif, par translation le long de l'axe longitudinal, du premier et du deuxième élément d'amortissement. Par « principalement longitudinale », on comprend que le ressort se comprime essentiellement selon la direction longitudinale, mais que les déplacements peuvent aussi avoir lieu selon une direction sensiblement inclinée par rapport à cet axe, permettant également une dissipation des mouvements de flexion. L'énergie associée à l'ensemble de ces déplacements est dissipée par les frottements avec la poudre disposée à l'intérieur de l'enceinte interne.

Selon le présent exposé, la structure de ressort externe, le premier et le deuxième élément d'amortissement sont formés en un même matériau, de préférence métallique, en un seul bloc et en une seule opération, par fabrication additive, conférant au dispositif d'amortissement des propriétés techniques particulières. En particulier, le dispositif est formé en une seule et même pièce métallique, sans raccord de fixation tel que des soudures entre les différentes pièces, améliorant ainsi la robustesse de ce dispositif. Le dispositif d'amortissement est ainsi compact, facile et peu coûteux à réaliser. En outre, cette technique de fabrication du dispositif d'amortissement permet la présence, à l'intérieur de l'enceinte interne à la fin de la fabrication, de la poudre métallique utilisée pour la fabrication additive, et restant à la fin de cette fabrication à l'intérieur de l'enceinte interne. La présence de cette poudre permet la dissipation des mouvements et l'amortissement des vibrations.

Par ailleurs, les capacités d'amortissement du dispositif varient peu en fonction de la température. En effet, le dispositif étant constitué d'un seul matériau, les variations de températures entrainent des dilatations ou des contractions uniformes du dispositif, sans générer de surcontraintes notables. De plus, du fait en particulier de l'absence de matériaux tels que des élastomères, ce dispositif présente l'avantage d'être utilisable sur une large plage de températures, allant des températures cryogéniques aux très hautes températures.

Dans certains modes de réalisation, le premier et le deuxième élément d'amortissement ont une forme de révolution autour de la direction longitudinale.

Le premier et le deuxième élément d'amortissement peuvent par exemple présenter une forme tronconique. La forme de révolution présente l'avantage d'être simple à réaliser, et d'augmenter la surface de contact entre les éléments d'amortissement et la poudre présente à l'intérieur de l'enceinte interne.

Dans certains modes de réalisation, le premier et le deuxième élément d'amortissement sont des cylindres emmanchés l'un dans l'autre.

Selon ce mode de réalisation, le premier et le deuxième élément d'amortissement présentent une section circulaire constante. L'un du premier et du deuxième élément d'amortissement présente un diamètre plus important que l'autre du premier et du deuxième élément d'amortissement. Ces deux éléments peuvent ainsi s'emmancher l'un dans l'autre, et peuvent translater l'un par rapport à l'autre le long de l'axe longitudinal, en fonction des mouvements de vibration du composant à isoler. La poudre métallique est présente à l'intérieur du cylindre de plus faible diamètre, entre la paroi externe du cylindre de plus faible diamètre et la paroi interne du cylindre de plus grand diamètre, et entre la paroi externe du cylindre de plus grand diamètre et la paroi interne de la structure de ressort externe. Les frottements engendrés entre ces différentes surfaces permettent d'améliorer la dissipation et l'amortissement des vibrations.

Dans certains modes de réalisation, le dispositif d'amortissement comprend au moins deux premiers éléments d'amortissement.

Lorsque les éléments d'amortissement sont des cylindres, par exemple, les dispositifs d'amortissement comprend au moins deux cylindres concentriques s'étendant chacun à l'intérieur de l'enceinte interne, depuis la première extrémité de la structure de ressort externe jusqu'à une extrémité libre. Selon cette configuration, les premiers et le deuxième éléments d'amortissement sont ainsi emmanchés les uns dans les autres. Par exemple, l'un des deux premiers éléments d'amortissement, présentant un diamètre plus faible que les autres, est emmanché dans le deuxième élément d'amortissement, lui-même emmanché dans l'autre premier élément d'amortissement présentant un diamètre plus important que les autres. Cette configuration permet d'augmenter encore les surfaces de contact entre ces différents éléments et la poudre, améliorant ainsi davantage la dissipation et la capacité d'amortissement du dispositif.

Par ailleurs, cette configuration n'est pas limitative. Le dispositif d'amortissement peut également comprendre deux deuxièmes éléments d'amortissement et un premier élément d'amortissement. De manière alternative, le dispositif d'amortissement peut comprendre deux, ou plus, premiers éléments d'amortissement et deux, ou plus, deuxième éléments d'amortissement, ces éléments d'amortissement étant chacun emmanchés les uns dans les autres.

Dans certains modes de réalisation, une portion de paroi de l'un du premier et du deuxième élément d'amortissement est en contact avec une portion de paroi de l'autre du premier et du deuxième élément d'amortissement, de telle sorte qu'une déformation élastique de la structure de ressort externe entraine un frottement des parois du premier et du deuxième élément d'amortissement entre elles.

Selon cette configuration, l'un au moins du premier et du deuxième élément d'amortissement présente une forme évasée, c'est-à-dire une section circulaire croissante jusqu'à son extrémité libre. L'autre du premier et du deuxième élément d'amortissement est insérée dans ladite extrémité libre de manière à être en contact avec une paroi interne de ladite extrémité libre, de telle sorte qu'une déformation élastique de la structure de ressort externe, entraine un frottement des parois du premier et du deuxième élément d'amortissement entre elles.

On comprend que cette forme évasée du premier élément d'amortissement, par exemple, permet de faciliter l'insertion du deuxième élément d'amortissement lorsque ces derniers se rapprochent l'un de l'autre en cas de compression de la structure de ressort externe. On comprend également que le deuxième élément d'amortissement présente un diamètre sensiblement inférieur à celui de l'extrémité libre évasée du premier élément d'amortissement, mais également égal ou supérieur à une section du premier élément d'amortissement plus en amont de cette extrémité évasée, c'est-à-dire plus proche de la première extrémité de la structure de ressort externe. Cette configuration permet à l'extrémité du deuxième élément d'amortissement de pénétrer à l'intérieur du premier élément d'amortissement, et d'être en contact contre une paroi interne du premier élément d'amortissement. Des mouvements de translations relatifs entre le premier et le deuxième élément d'amortissement, le long de l'axe longitudinal, entrainent ainsi un frottement entre les parois respectives du premier et du deuxième élément d'amortissement. Cette zone de frottement supplémentaire, en plus des frottements avec la poudre, permet d'améliorer les effets de la dissipation et donc l'amortissement du dispositif.

De manière alternative, les extrémités libres de chacun du premier et du deuxième élément d'amortissement peuvent être évasées, ou l'extrémité de l'un du premier et du deuxième élément d'amortissement peut être évasée, l'extrémité de l'autre du premier et du deuxième élément d'amortissement étant convergente.

Dans certains modes de réalisation, le premier et le deuxième élément d'amortissement sont des lamelles de forme courbées, de manière à être en contact l'une avec l'autre.

Selon cette configuration, le premier et le deuxième élément d'amortissement ne présentent pas une forme de révolution, mais sont des lamelles de forme courbée, c'est-à-dire recourbées de manière à être en contact l'une avec l'autre. Le premier et le deuxième élément d'amortissement peuvent par exemple être déformés élastiquement de manière à ce qu'ils exercent chacun une force l'un contre l'autre, au repos. Les surfaces du premier et du deuxième élément d'amortissement frottent ainsi l'une avec l'autre lorsque la structure de ressort externe se déforme. Cette configuration permet de définir des zones de contact supplémentaires, de manière à augmenter le pouvoir dissipatif du dispositif d'amortissement.

Dans certains modes de réalisation, une pluralité de saillies s'étendent dans l'enceinte interne, depuis le premier et/ou le deuxième élément d'amortissement jusqu'à une extrémité libre, les saillies étant formées en un seul bloc par fabrication additive avec la structure de ressort externe, le première et le deuxième élément d'amortissement.

On comprend que les saillies sont formées en un seul bloc avec les autres éléments du dispositif, lors de la fabrication de ce dernier par fabrication additive. Ces saillies comprennent donc le même matériau métallique que ces autres éléments. Elles s'étendant de préférence de manière sensiblement perpendiculaire à la direction longitudinale, depuis une paroi externe du premier et/ou du deuxième élément d'amortissement. La présence de ces saillies permet d'augmenter encore les surfaces en contact avec la poudre dans l'enceinte interne, augmentant ainsi les frottements, en cas de déformation de la structure de ressort externe. Cela permet d'augmenter d'avantage la dissipation, permettant d'améliorer encore la capacité d'amortissement du dispositif.

Dans certains modes de réalisation, les extrémités libres des saillies présentent une forme sensiblement sphérique, et sont rattachées au premier et/ou au deuxième élément d'amortissement par l'intermédiaire d'un bras de liaison.

En d'autres termes, les saillies présentent la forme de tiges, ou de picots, faisant saillie depuis une paroi du premier et/ou du deuxième élément d'amortissement, au bout duquel est formée une boule, par exemple. Cette forme de boule n'est pas limitative, d'autres formes pouvant être envisagées, dans la mesure où cette forme permet d'augmenter la surface de contact avec la poudre, et donc d'augmenter les frottements.

Dans certains modes de réalisation, la structure de ressort externe comprend un orifice mettant en communication l'enceinte interne avec l'extérieur de la structure de ressort externe.

La présence d'un orifice traversant la paroi de la structure de ressort externe permet d'extraire une partie de la poudre présente à l'intérieur de l'enceinte interne. Le fait de réduire légèrement la quantité de poudre emprisonnée dans l'enceinte interne permet de diminuer la densité et le taux de compactage de la poudre, et d'ajuster ainsi la capacité de la poudre à frotter sur elle-même et sur les parois des éléments d'amortissement et de la structure de ressort externe. Cet orifice peut être prévu lors de la fabrication du dispositif par fabrication additive.

Dans certains modes de réalisation, l'orifice est taraudé. Il est ainsi possible de refermer cet orifice lorsque la quantité souhaitée de poudre a été extraite de l'enceinte interne. De manière alternative, l'orifice peut être refermé par soudage.

Dans certains modes de réalisation, la structure de ressort externe présente la forme d'un soufflet.

La forme de soufflet est de préférence axisymétrique autour de l'axe longitudinal. On comprend que la forme de soufflet, ou d'accordéon, est telle que la structure de ressort externe peut se déformer élastiquement en se comprimant, ou en s'étendant selon l'axe longitudinal, en fonction des mouvements relatif du composant à isoler et de la structure porteuse, remplissant ainsi sa fonction de ressort.

Le présent exposé concerne également un engin spatial comprenant une structure porteuse et un composant à isoler fixé à la structure porteuse par l'intermédiaire d'un dispositif d'amortissement selon l'un quelconque des modes de réalisation précédents.

Le présent exposé concerne également un procédé de fabrication d'un dispositif d'amortissement selon l'un quelconque des modes de réalisation précédents, comprenant la fabrication d'une structure de ressort externe renfermant une enceinte interne, et d'au moins un élément d'amortissement, en un seul bloc par fabrication additive, de manière à laisser la poudre utilisée pour la fabrication additive à l'intérieur de l'enceinte interne.

Dans certains modes de réalisation, le procédé comprend une étape de frittage par laser de la poudre à l'intérieur de l'enceinte interne.

Le frittage peut être réalisé par laser avec une faible énergie, et peut être effectué sur tout le volume de poudre ou dans des zones spécifiques. Ce frittage permet d'augmenter les frottements lors d'une sollicitation extérieure, et d'augmenter ainsi le taux de dissipation du dispositif d'amortissement.

Dans certains modes de réalisation, la fabrication du dispositif d'amortissement est réalisée dans une enceinte sous vide.

Cette technique dite de fusion par faisceau d'électrons (« Electron Beam Melting » en anglais) permet de compacter la structure en utilisation sans que cela ne soit limité par la compressibilité de l'air ou du gaz emprisonné à l'intérieur. Cela permet donc également d'augmenter ainsi le taux de dissipation du dispositif d'amortissement.

Dans certains modes de réalisation, la rugosité des surfaces des parois internes est ajustée en modifiant les paramètres de la fabrication additive. En particulier, un état de surface plus rugueux améliore la dissipation.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente schématiquement une section longitudinale d'une portion d'engin spatial comprenant un dispositif d'amortissement selon un premier mode de réalisation du présent exposé,
[Fig. 2] La figure 2 représente le dispositif d'amortissement de la figure 1, selon un deuxième mode de réalisation du présent exposé,
[Fig. 3] La figure 3 représente le dispositif d'amortissement de la figure 1, selon un troisième mode de réalisation du présent exposé,
[Fig. 4] La figure 4 représente le dispositif d'amortissement de la figure 1, selon un quatrième mode de réalisation du présent exposé,
[Fig. 5] La figure 5 représente le dispositif d'amortissement de la figure 1, selon un cinquième mode de réalisation du présent exposé,
[Fig. 6] La figure 6 représente le dispositif d'amortissement de la figure 1, selon un sixième mode de réalisation du présent exposé.

### Description des modes de réalisation

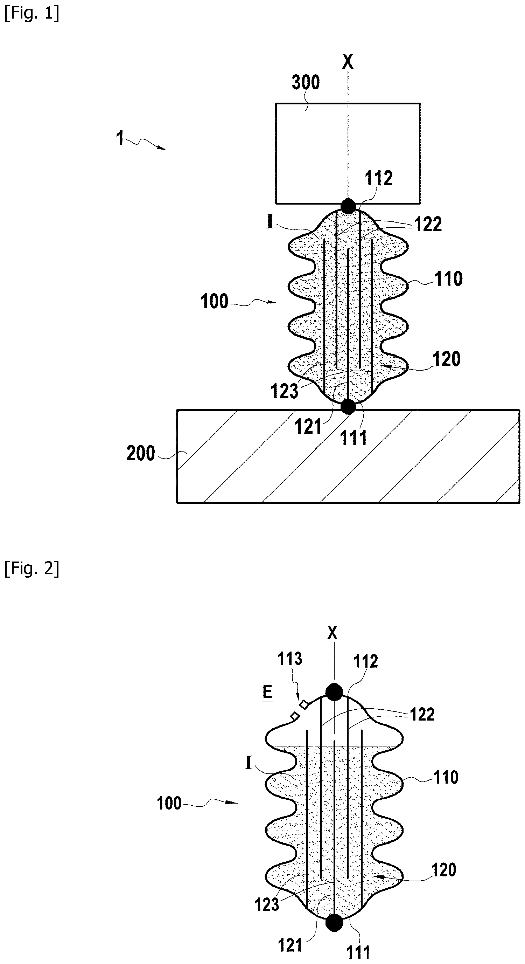

La figure 1 représente schématiquement une vue en coupe d'une portion d'un engin spatial 1 comprenant une structure porteuse 200, par exemple un carter fixe de l'engin spatial 1, un composant à isoler 300, par exemple une platine comportant des électrovannes, ou des boîtiers électriques, et un dispositif d'amortissement 100 selon un premier mode de réalisation du présent exposé. Le dispositif d'amortissement 100 est du type ressort-amortisseur, associant en parallèle une fonction ressort et une fonction amortisseur.

Dans cet exemple, le dispositif d'amortissement 100 est axisymétrique autour d'une direction longitudinale X, le système ressort-amortisseur étant configuré pour se déformer élastiquement principalement selon cette direction. Néanmoins, ce système ressort-amortisseur permet également de dissiper les mouvements de flexion.

La fonction ressort du dispositif d'amortissement 100 est assurée par une structure de ressort externe 110, présentant la forme d'un soufflet, ou accordéon, configuré pour se déformer élastiquement, en se comprimant ou en se détendant le long de la direction longitudinale X. La structure de ressort externe 110 forme une structure close et hermétique renfermant une enceinte interne I. Elle comprend axialement, selon la direction longitudinale X, une première extrémité 111 fixée à la structure porteuse 200, et une deuxième extrémité 112 fixée au composant à isoler 300. Les première et deuxième extrémités 111, 112 peuvent être fixées à la structure porteuse 200 et au composant à isoler 300 respectivement, par soudage ou par brasage, par exemple, ou par liaisons vissées.

La fonction d'amortissement du dispositif d'amortissement 100 est assurée par une structure d'amortissement 120, comprenant un premier élément d'amortissement solidaires de la première extrémité 111 de la structure de ressort externe 110, et un deuxième élément d'amortissement solidaire de la deuxième extrémité 112 de la structure de ressort externe 110.

Dans cet exemple, le premier élément d'amortissement comprend un cylindre central 121 d'axe parallèle à la direction longitudinale X, et un cylindre externe 123, coaxial avec le cylindre central 121 et entourant ce dernier. Le cylindre central 121 et le cylindre externe 123 comprennent une extrémité longitudinale fixée à la première extrémité 111 de la structure de ressort externe 110, et s'étendent à l'intérieur de l'enceinte interne I jusqu'à une extrémité libre.

Le deuxième élément d'amortissement comprend un cylindre intermédiaire 122, coaxial avec le cylindre central 121 et le cylindre externe 123, le cylindre intermédiaire 122 ayant une extrémité longitudinale fixée à la deuxième extrémité 112 de la structure de ressort externe 110, et s'étend à l'intérieur de l'enceinte interne I jusqu'à une extrémité libre. Les différents éléments d'amortissement sont emmanchés les uns dans les autres de manière à ce que le cylindre central 121 soit disposé radialement à l'intérieur du cylindre intermédiaire 122, la cylindre intermédiaire 122 étant lui-même disposée radialement à l'intérieur du cylindre externe 123. On notera que les termes « radialement externe » ou « radialement interne » et leurs dérivés sont considérés par rapport à la direction longitudinale X, une direction radiale étant donc perpendiculaire à cette direction longitudinale X.

Les différents cylindres 121, 122, 123 peuvent ainsi coulisser les uns dans les autres, par un mouvement relatif de translation selon la direction longitudinale X, en fonction des mouvements de compression de la structure de ressort externe 110, eux-mêmes engendrés par les mouvements vibratoires du composant à isoler 300. Ils peuvent également se déplacer les uns par rapport aux autres dans une direction transversale à la direction longitudinale X, du fait de l'espace radial existant entre ces différents cylindres 121, 122, 123, en fonction des mouvements relatifs entre la structure porteuse 200 et le composant à isoler 300, provoqués par les vibrations, notamment quand le dispositif travaille en flexion ou lorsqu'il est sollicité en cisaillement.

Un procédé de fabrication du dispositif d'amortissement 100 va être décrit dans le paragraphe suivant.

L'ensemble du dispositif d'amortissement 100 est fabriqué par fabrication additive, c'est-à-dire par fusion laser de couches successives de poudre métallique. Cette poudre métallique peut comprendre des superalliages à base de nickel (Inconel 718^{®}, Hastelloy X^{®}), des alliages d'aluminium, de titanes, ou de l'acier, par exemple. On comprend donc que la structure de ressort externe 110, et la structure d'amortissement 120 comprenant les éléments d'amortissement 121, 122, 123, sont fabriqués en une seule opération, permettant d'obtenir le dispositif d'amortissement 100 sous la forme d'une pièce monobloc comprenant un unique matériau. Compte tenu du fait que la structure de ressort externe 110 est fabriquée de manière à renfermer une enceinte interne I, cette dernière est remplie au moins en partie, à la fin du procédé de fabrication, par la poudre métallique ayant servi à ce procédé de fabrication additive (représentée en gris sur les figures 1 à 4). On comprend donc que la poudre résiduelle, qui n'a pas été fondue pour former les parois du dispositif d'amortissement, n'est pas évacuée, mais est laissée, couche après couche, à l'intérieur de l'enceinte interne I. En particulier, de la poudre métallique est présente entre le cylindre interne 121 et la paroi radialement interne du cylindre intermédiaire 122, entre la paroi radialement externe du cylindre intermédiaire 122 et la paroi interne du cylindre externe 123, et entre la paroi externe du cylindre externe 123 et la paroi interne de la structure de ressort externe 110. Bien que tout le volume de l'enceinte interne I soit représenté en gris sur la figure 1, cet exemple n'est pas limitatif, une partie du volume de l'enceinte interne I pouvant ne pas être remplie de poudre, mais d'air, par exemple.

La poudre présente dans l'enceinte interne I permet de dissiper l'énergie engendrée par le mouvements relatifs des différents éléments d'amortissement, permettant de générer l'amortissement souhaité, par frottement au sein même de la poudre, ainsi qu'entre la poudre et les cylindres 121, 122, 123, et entre la poudre et les parois internes de la structure de ressort externe 110.

Le taux de dissipation du dispositif d'amortissement 100 peut être augmenté en frittant par laser à faible énergie la poudre présente dans l'enceinte interne I, et/ou en réalisant le procédé de fabrication additive décrit ci-dessus dans une enceinte sous vide, de manière à ce que la structure de ressort externe 110 puisse se compacter, et les éléments d'amortissement puissent se déplacer les uns par rapport aux autres, sans être limités par la compressibilité de l'air ou du gaz susceptible d'être emprisonné à l'intérieur de l'enceinte interne I.

Bien que ce mode de réalisation décrive une structure comprenant trois cylindres emmanchés les uns dans les autres, cet exemple n'est pas limitatif, un nombre différent de cylindres pouvant être envisagé. Par exemple, un seul cylindre peut être fixé à la première extrémité 111 et à la deuxième extrémité 112 respectivement. De manière alternative, deux cylindres ou plus peuvent être fixés à la première extrémité 111 et à la deuxième extrémité 112 respectivement, en étant emmanché les uns dans les autres. De même, la forme cylindrique, impliquant une section circulaire, n'est pas limitative. D'autres formes peuvent être envisagées pour les éléments d'amortissement (par exemple des éléments d'amortissement de section carrée), dès lors que ces derniers peuvent se déplacer les uns par rapport aux autres, de la même façon que les cylindres décrits ci-dessus.

La figure 2 représente schématiquement une vue en coupe d'un dispositif d'amortissement 100 selon un deuxième mode de réalisation du présent exposé. Afin de simplifier la suite de la description, la structure porteuse 200 et le composant à isoler 300 ne sont pas représentés. Toutefois, les première et deuxième extrémités 111, 112 sont également configurées pour être fixées à une structure porteuse 200 et à un composant à isoler 300 respectivement.

Le dispositif d'amortissement 100 selon ce deuxième mode de réalisation diffère du dispositif d'amortissement selon le premier mode de réalisation, en ce que la structure de ressort externe 110 comprend un orifice 113 traversant la paroi de la structure de ressort 110 de manière à mettre en communication l'enceinte interne I avec l'extérieur E de la structure de ressort externe 110. Cet orifice traversant 113 peut être réalisé après la fabrication du dispositif d'amortissement 100, ou être prévu au cours de la fabrication du dispositif d'amortissement 100 par fabrication additive. Cet orifice 113 permet d'extraire une partie de la poudre présente à l'intérieur de l'enceinte interne I, afin d'ajuster la densité et le taux de compactage de la poudre, et d'améliorer ainsi la capacité de la poudre à frotter sur elle-même et sur les parois des éléments d'amortissement et de la structure de ressort externe 110.

L'orifice 113 peut en outre être taraudé, afin de refermer cet orifice 113 lorsque la quantité souhaitée de poudre a été extraite de l'enceinte interne I. De manière alternative, l'orifice peut être refermé par soudage.

Hormis la présence de cet orifice 113, les autres caractéristiques décrites en référence au premier mode de réalisation, liées à la structure du dispositif d'amortissement 100 et au procédé de fabrication de ce dernier, sont également applicables au deuxième mode de réalisation.

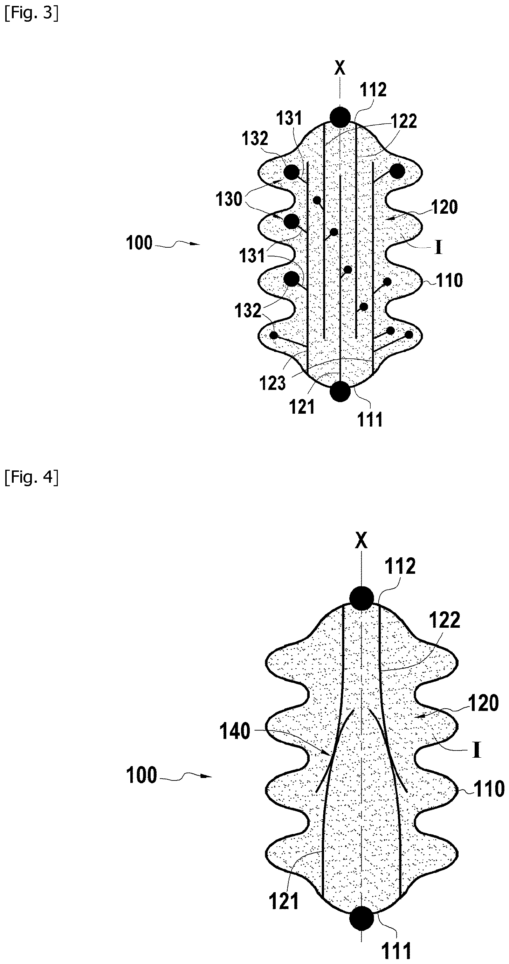

La figure 3 représente schématiquement une vue en coupe d'un dispositif d'amortissement 100 selon un troisième mode de réalisation du présent exposé. Afin de simplifier la suite de la description, la structure porteuse 200 et le composant à isoler 300 ne sont pas représentés. Toutefois, les première et deuxième extrémités 111, 112 sont également configurées pour être fixées à une structure porteuse 200 et à un composant à isoler 300 respectivement.

Le dispositif d'amortissement 100 selon ce troisième mode de réalisation diffère du dispositif d'amortissement selon le premier mode de réalisation, en ce qu'il comprend en outre une pluralité de saillies 130 s'étendant depuis le premier et/ou le deuxième élément d'amortissement, en particulier depuis le cylindre central 121, le cylindre intermédiaire 122 et le cylindre externe 123. Plus précisément, les saillies 130 comprennent chacune un bras de liaison 131 dont une extrémité est solidaire de l'un des cylindres 121, 122, 123, et dont l'autre extrémité est une extrémité libre disposée dans l'enceinte interne I. Une protubérance, de diamètre plus important que le diamètre du bras de liaison 131, est fixée à cette extrémité libre. Cette protubérance prend, dans cet exemple, la forme d'une sphère 132. Cette forme n'est cependant pas limitative, d'autres formes, telle qu'une forme cubique, peuvent être envisagées, dès lors que l'extrémité libre de ces saillies permet d'augmenter la surface de contact, et donc la surface de frottement, entre les éléments d'amortissement et la poudre métallique.

Les saillies 130 sont formées en un seul bloc par fabrication additive avec la structure de ressort externe 110, et les éléments d'amortissement, notamment le cylindre interne 121, le cylindre intermédiaire 122 et le cylindre externe 123. Elles s'étendent, dans l'exemple illustré sur la figure 3, radialement vers l'intérieur ou vers l'extérieur, de manière inclinée par rapport à la direction longitudinale X, depuis la paroi des cylindres 121, 122, 123. de manière alternative, elles peuvent également s'étendre radialement, de manière sensiblement perpendiculaire à la direction longitudinale X.

Hormis la présence de ces saillies 130, les autres caractéristiques décrites en référence au premier mode de réalisation, liées à la structure du dispositif d'amortissement 100 et au procédé de fabrication de ce dernier, sont également applicables au troisième mode de réalisation.

La figure 4 représente schématiquement une vue en coupe d'un dispositif d'amortissement 100 selon un quatrième mode de réalisation du présent exposé. Afin de simplifier la suite de la description, la structure porteuse 200 et le composant à isoler 300 ne sont pas représentés. Toutefois, les première et deuxième extrémités 111, 112 sont également configurées pour être fixées à une structure porteuse 200 et à un composant à isoler 300 respectivement.

Le dispositif d'amortissement 100 selon ce quatrième mode de réalisation diffère du dispositif d'amortissement selon le premier mode de réalisation, en ce que les éléments d'amortissement ne sont pas des cylindres, mais présentent une section non constante, selon la direction longitudinale X. Plus précisément, la structure d'amortissement 120 comprend un premier élément d'amortissement 121 de section décroissante depuis la première extrémité 111 jusqu'à son extrémité libre, et un deuxième élément d'amortissement 122 de section croissante depuis la deuxième extrémité 122 jusqu'à son extrémité libre.

Par ailleurs, dans cet exemple, le diamètre de la section du premier élément d'amortissement 121, au voisinage de la première extrémité 111, est supérieur au diamètre de la section du deuxième élément d'amortissement 122, au voisinage de la première extrémité 112. A l'inverse, le diamètre de la section du premier élément d'amortissement 121, au voisinage de son extrémité libre, est inférieur au diamètre de la section du deuxième élément d'amortissement 122, au voisinage de son extrémité libre. Selon cette configuration, le premier élément d'amortissement 121 est disposé au moins en partie, radialement à l'intérieur du deuxième élément d'amortissement 122, de telle sorte qu'une surface de contact 140 existe entre le premier élément d'amortissement 121, et le deuxième élément d'amortissement 122.

Des mouvements de translations relatifs entre le premier et le deuxième élément d'amortissement 121, 122, le long de l'axe longitudinal X, entrainent ainsi un frottement entre les parois respectives du premier et du deuxième élément d'amortissement 121, 122, au niveau de cette surface de contact 140. Cette zone de frottement supplémentaire, en plus des frottements avec la poudre, permet d'améliorer les effets de la dissipation et donc l'amortissement du dispositif d'amortissement 100.

La forme illustrée sur la figure 4 n'est pas limitative, les premier et deuxième éléments d'amortissement 121, 122 pouvant être formés de façon à ce que plusieurs surfaces de contact 140 existent entre ces deux éléments d'amortissement. De même, les éléments d'amortissement 121, 122 peuvent présenter une forme de révolution autour de la direction longitudinale X, présentant des extrémités évasées ou convergentes, telles que décrites ci-dessus. Cependant, cette forme n'est pas limitative. Les éléments d'amortissements 121, 122 peuvent également être des lamelles recourbées longitudinalement à leur extrémité libre, de manière à obtenir une surface de contact 140 telle qu'illustrée sur la figure 4.

Hormis la forme des éléments d'amortissement, les autres caractéristiques décrites en référence au premier mode de réalisation, liées à la structure du dispositif d'amortissement 100 et au procédé de fabrication de ce dernier, sont également applicables au quatrième mode de réalisation.

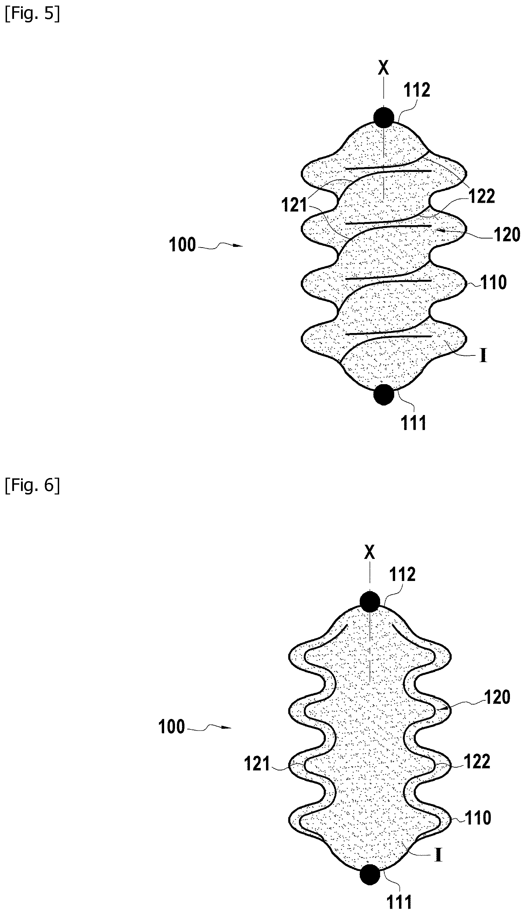

Les figures 5 et 6 représentent schématiquement une vue en coupe d'un dispositif d'amortissement 100 selon un cinquième et un sixième mode de réalisation du présent exposé. Afin de simplifier la suite de la description, la structure porteuse 200 et le composant à isoler 300 ne sont pas représentés. Toutefois, les première et deuxième extrémités 111, 112 sont également configurées pour être fixées à une structure porteuse 200 et à un composant à isoler 300 respectivement.

Les dispositifs d'amortissement 100 selon ce cinquième et ce sixième mode de réalisation diffèrent du dispositif d'amortissement selon le premier mode de réalisation, en ce que les éléments d'amortissement 121, 122 ne sont pas solidaires des première et deuxième extrémités 111 et 122, mais sont solidaires d'une paroi latérales de la structure de ressort interne 110. Selon le cinquième mode de réalisation, les éléments d'amortissement 121, 122 comprennent une pluralité de lamelles, de préférence recourbées, s'étendant de manière transversale, par rapport à la direction longitudinale X. Selon le sixième mode de réalisation, les éléments d'amortissement 121, 122 présentent une structure en forme de soufflet, correspondant à la structure de ressort interne 110, et s'étendant principalement selon la direction longitudinale X. Ces configurations permettent d'améliorer la dissipation entre la poudre et les éléments d'amortissement, sans augmenter la raideur de l'ensemble, et ainsi sans limiter les déplacements et donc les mouvements relatifs au sein de la poudre.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par exemple, l'orifice 113 du deuxième mode de réalisation peut également être appliqué au troisième et au quatrième mode de réalisation. De même, les saillies 130 peuvent également être appliquées au quatrième mode de réalisation. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif d'amortissement (100) pour engin spatial, configuré pour amortir les vibrations entre un composant à isoler (300) et une structure porteuse (200) de l'engin spatial, le dispositif d'amortissement (100) comprenant :
- une structure de ressort externe (110) renfermant une enceinte interne (I), configurée pour se déformer élastiquement selon une direction principalement longitudinale (X), et comprenant une première extrémité (111) configurée pour être fixée à la structure porteuse (200), et une deuxième extrémité (112) configurée pour être fixée au composant à isoler (300),
- au moins un élément d'amortissement (121) solidaire de la structure de ressort externe (110) et s'étendant à l'intérieur de l'enceinte interne (I),
la structure de ressort externe (110) et l'élément d'amortissement (121) étant formés en un même matériau métallique et en un seul bloc par fabrication additive, l'enceinte interne (I) étant remplie au moins en partie d'une poudre de ce même matériau métallique de manière à ce que l'élément d'amortissement (121) soit disposé au moins en partie dans la poudre.

2. Dispositif selon la revendication 1, dans lequel l'élément d'amortissement (121) est un premier élément d'amortissement solidaire de la première extrémité (111), le dispositif d'amortissement (100) comprenant au moins un deuxième élément d'amortissement (122) solidaire de la deuxième extrémité (112) et s'étendant à l'intérieur de l'enceinte interne (I), le premier et le deuxième élément d'amortissement (121, 122) étant configurés pour se déplacer relativement l'un par rapport à l'autre le long de la direction principalement longitudinale (X) lorsque la structure de ressort externe (110) se déforme élastiquement principalement selon ladite direction longitudinale (X), la structure de ressort externe (110), le premier et le deuxième élément d'amortissement (121, 122) étant formés en un même matériau métallique et en un seul bloc par fabrication additive.

3. Dispositif selon la revendication 2, dans lequel le premier et le deuxième élément d'amortissement (121, 122) ont une forme de révolution autour de la direction longitudinale (X).

4. Dispositif selon la revendication 2 ou 3, dans lequel le premier et le deuxième élément d'amortissement (121, 122) sont des cylindres emmanchés l'un dans l'autre.

5. Dispositif selon l'une quelconque des revendications 2 à 4, dans lequel une portion de paroi de l'un du premier et du deuxième élément d'amortissement (121, 122) est en contact avec une portion de paroi de l'autre du premier et du deuxième élément d'amortissement (121, 122), de telle sorte qu'une déformation élastique de la structure de ressort externe (110), entraine un frottement des parois du premier et du deuxième élément d'amortissement (121, 122) entre elles.

6. Dispositif selon l'une quelconque des revendications 2 à 5, dans lequel une pluralité de saillies (130) s'étendent depuis le premier et/ou le deuxième élément d'amortissement (121, 122) jusqu'à une extrémité libre (132) dans l'enceinte interne (I), les saillies (130) étant formées en un seul bloc par fabrication additive avec la structure de ressort externe (110), le première et le deuxième élément d'amortissement (121, 122).

7. Dispositif selon la revendication 6, dans lequel les extrémités libres (132) des saillies (130) présentent une forme sensiblement sphérique, et sont rattachées au premier et/ou au deuxième élément d'amortissement (121, 122) par l'intermédiaire d'un bras de liaison (131).

8. Dispositif selon l'une quelconque des revendications 1 à 7, dans lequel la structure de ressort externe (110) comprend un orifice taraudé (113) mettant en communication l'enceinte interne (I) avec l'extérieur (E) de la structure de ressort externe (110).

9. Dispositif selon l'une quelconque des revendications 1 à 8, dans lequel la structure de ressort externe (110) présente la forme d'un soufflet.

10. Engin spatial (1) comprenant une structure porteuse (200) et un composant à isoler (300) fixé à la structure porteuse (200) par l'intermédiaire d'un dispositif d'amortissement (100) selon l'une quelconque des revendications précédentes.

11. Procédé de fabrication d'un dispositif d'amortissement (100) selon l'une quelconque des revendications 1 à 9, comprenant la fabrication d'une structure de ressort externe (110) renfermant une enceinte interne (I), et d'au moins un élément d'amortissement (121), en un seul bloc par fabrication additive, de manière à laisser la poudre utilisée pour la fabrication additive à l'intérieur de l'enceinte interne (I).

12. Procédé selon la revendication 11, comprenant une étape de frittage par laser de la poudre à l'intérieur de l'enceinte interne (I).

13. Procédé selon la revendication 11 ou 12, dans lequel la fabrication du dispositif d'amortissement (100) est réalisée dans une enceinte sous vide.

## Patentansprüche

1. Dämpfungsvorrichtung (100) für ein Raumfahrzeug, die dazu ausgestaltet ist, die Schwingungen zwischen einer Isolierkomponente (300) und einer Tragstruktur (200) des Raumfahrzeugs zu dämpfen, wobei die Dämpfungsvorrichtung (100) umfasst:
- eine äußere Federstruktur (110), die eine innere Kammer (I) enthält, dazu ausgestaltet ist, sich gemäß einer Hauptlängsrichtung (X) elastisch zu verformen, und ein erstes Ende (111) umfasst, das dazu ausgestaltet ist, an der Tragstruktur (200) befestigt zu werden, und ein zweites Ende (112), das dazu ausgestaltet ist, an der Isolierkomponente (300) befestigt zu werden,
- mindestens ein Dämpfungselement (121), das fest mit der äußeren Federstruktur (110) verbunden ist und sich in das Innere der inneren Kammer (I) erstreckt, wobei die äußere Federstruktur (110) und das Dämpfungselement (121) aus einem gleichen metallischen Material und einstückig durch additive Fertigung ausgebildet sind, wobei die innere Kammer (I) zumindest teilweise mit einem Pulver aus diesem metallischen Material derart gefüllt ist, dass das Dämpfungselement (121) zumindest teilweise in dem Pulver angeordnet ist.

2. Vorrichtung nach Anspruch 1, wobei das Dämpfungselement (121) ein erstes Dämpfungselement ist, das fest mit dem ersten Ende (111) verbunden ist, wobei die Dämpfungsvorrichtung (100) mindestens ein zweites Dämpfungselement (122) umfasst, das fest mit dem zweiten Ende (112) verbunden ist und sich in das Innere der inneren Kammer (I) erstreckt, wobei das erste und das zweite Dämpfungselement (121, 122) dazu ausgestaltet sind, sich im Verhältnis zueinander entlang der Hauptlängsrichtung (X) zu verschieben, wenn sich die äußere Federstruktur (110) hauptsächlich entlang der Längsrichtung (X) elastisch verformt, wobei die äußere Federstruktur (110), das erste und das zweite Dämpfungselement (121, 122) aus einem gleichen metallischen Material und einstückig durch additive Fertigung ausgebildet sind.

3. Vorrichtung nach Anspruch 2, wobei das erste und das zweite Dämpfungselement (121, 122) eine Rotationsform um die Längsrichtung (X) herum aufweisen.

4. Vorrichtung nach Anspruch 2 oder 3, wobei das erste und das zweite Dämpfungselement (121, 122) ineinandergreifende Zylinder sind.

5. Vorrichtung nach einem der Ansprüche 2 bis 4, wobei ein Wandabschnitt von einem von dem ersten und dem zweiten Dämpfungselement (121, 122) mit einem Wandabschnitt von dem anderen von dem ersten und dem zweiten Dämpfungselement (121, 122) derart in Kontakt steht, dass eine elastische Verformung der äußeren Federstruktur (110) zu einer Reibung der Wände des ersten und des zweiten Dämpfungselements (121, 122) miteinander führt.

6. Vorrichtung nach einem der Ansprüche 2 bis 5, wobei sich mehrere Vorsprünge (130) von dem ersten und/oder dem zweiten Dämpfungselement (121, 122) bis zu einem freien Ende (132) in der inneren Kammer (I) erstrecken, wobei die Vorsprünge (130) mit der äußeren Federstruktur (110), dem ersten und dem zweiten Dämpfungselement (121, 122) einstückig durch additive Fertigung ausgebildet sind.

7. Vorrichtung nach Anspruch 6, wobei die freien Enden (132) der Vorsprünge (130) eine im Wesentlichen kugelförmige Form aufweisen und an dem ersten und/oder dem zweiten Dämpfungselement (121, 122) über einen Verbindungsarm (131) angebracht sind.

8. Vorrichtung nach einem der Ansprüche 1 bis 7, wobei die äußere Federstruktur (110) eine Gewindebohrung (113) umfasst, die eine Verbindung zwischen der inneren Kammer (I) und der Außenseite (E) der äußeren Federstruktur (110) herstellt.

9. Vorrichtung nach einem der Ansprüche 1 bis 8, wobei die äußere Federstruktur (110) die Form eines Balgs aufweist.

10. Raumfahrzeug (1), umfassend eine Tragstruktur (200) und eine Isolierkomponente (300), die an der Tragstruktur (200) über eine Dämpfungsvorrichtung (100) nach einem der vorhergehenden Ansprüche befestigt ist.

11. Verfahren zum Herstellen einer Dämpfungsvorrichtung (100) nach einem der Ansprüche 1 bis 9, umfassend die Herstellung einer äußeren Federstruktur (110), die eine innere Kammer (I) enthält, und mindestens eines Dämpfungselements (121) einstückig durch additive Fertigung derart, dass das zur additiven Fertigung verwendete Pulver im Inneren der inneren Kammer (I) belassen wird.

12. Verfahren nach Anspruch 11, umfassend einen Schritt des Lasersinterns des Pulvers im Inneren der inneren Kammer (I).

13. Verfahren nach Anspruch 11 oder 12, wobei die Herstellung der Dämpfungsvorrichtung (100) in einer Vakuumkammer erfolgt.

## Claims

1. A damping device (100) for a spacecraft, configured to dampen the vibrations between a component to be isolated (300) and a supporting structure (200) of the spacecraft, the damping device (100) comprising:
- an outer spring structure (110) containing an inner enclosure (I), configured to deform elastically along a mainly longitudinal direction (X), and comprising a first end (111) configured to be fixed to the supporting structure (200), and a second end (112) configured to be fixed to the component to be isolated (300),
- at least one damping element (121) secured to the outer spring structure (110) and extending inside the inner enclosure (I), the outer spring structure (110) and the damping element (121) being formed from the same metal material and in a single block by additive manufacturing, the inner enclosure (I) being filled at least partly with a powder of this same metal material such that the damping element (121) is disposed at least partly in the powder.

2. The device according to claim 1, wherein the damping element (121) is a first damping element secured to the first end (111), the damping device (100) comprising at least a second damping element (122) secured to the second end (112) and extending inside the inner enclosure (I), the first and the second damping element (121, 122) being configured to move relative to each other along the mainly longitudinal direction (X) when the outer spring structure (110) deforms elastically mainly along said longitudinal direction (X), the outer spring structure (110), the first and the second damping element (121, 122) being formed from the same metal material and in a single block by additive manufacturing.

3. The device according to claim 2, wherein the first and the second damping element (121, 122) have a form of revolution around the longitudinal direction (X).

4. The device according to claim 2 or 3, wherein the first and the second damping element (121, 122) are cylinders fitted into one another.

5. The device according to any one of claims 2 to 4, wherein a wall portion of one of the first and of the second damping element (121, 122) is in contact with a wall portion of the other of the first and of the second damping element (121, 122), such that an elastic deformation of the outer spring structure (110) causes friction of the walls of the first and of the second damping element (121, 122) together.

6. The device according to any one of claims 2 to 5, wherein a plurality of protrusions (130) extend from the first and/or the second damping element (121, 122) to a free end (132) in the inner enclosure (I), the protrusions (130) being formed in a single block by additive manufacturing with the outer spring structure (110), the first and the second damping element (121, 122).

7. The device according to claim 6, wherein the free ends (132) of the protrusions (130) have a substantially spherical shape, and are attached to the first and/or to the second damping element (121, 122) by means of a connecting arm (131).

8. The device according to any one of claims 1 to 7, wherein the outer spring structure (110) comprises a threaded orifice (113) communicating the inner enclosure (I) with the outside (E) of the outer spring structure (110).

9. The device according to any one of claims 1 to 8, wherein the outer spring structure (110) has the form of a bellows.

10. A spacecraft (1) comprising a supporting structure (200) and a component to be isolated (300) fixed to the supporting structure (200) by means of a damping device (100) according to any one of the preceding claims.

11. A method for manufacturing a damping device (100) according to any one of claims 1 to 9, comprising the manufacture of an outer spring structure (110) containing an inner enclosure (I), and of at least one damping element (121), in a single block by additive manufacturing, so as to leave the powder used for the additive manufacturing inside the inner enclosure (I).

12. The method according to claim 11, comprising a step of laser sintering the powder inside the inner enclosure (I).

13. The method according to claim 11 or 12, wherein the manufacture of the damping device (100) is carried out in a vacuum chamber.
